# EUROPEAN PATENT APPLICATION

(11) **EP 1 077 340 A2**
(43) Date of publication of application: **21.02.2001**
(21) Application number: 00307049.7
(22) Date of filing: 17.08.2000
(51) Int. Cl.: F16K 31/06

(54) **Solenoid valve plunger**

(30) Priority: 19.08.1999 US 149776 P
(71) Applicant: PARKER-HANNIFIN CORPORATION, Cleveland, Ohio 44124-4141 (US)
(72) Inventor: Mudge, Dennis, Rocky Hill, Connecticut 06067 (US); Zeiner, Robert, Torrington, Connecticut 06790 (US); Domke, Robert A., Glastonbury, Connecticut 06033 (US); Ferrando, Robert F., Wallingford, Connecticut 06402 (US); Horlacher, Wilhelm H., Newington, Connecticut 06111 (US); Janowski, Kazimierz, Newington, Connecticut 06111 (US)
(74) Representative: Boden, Keith McMurray

(57) **Abstract**

A solenoid valve (15) has a valve body (17) with inlet and outlet ports (23, 24) and an internal main orifice (27) fluidly interconnecting the inlet and outlet ports (23, 24). A solenoid coil assembly (16) is mounted to the valve body (17). A plunger assembly (140) is axially slideable within the solenoid coil (16) and seals against the orifice (27) to prevent fluid flow therethrough when the solenoid valve (15) is in one operating condition and be spaced from the orifice (27) to allow fluid flow therethrough when the solenoid valve (15) is in another operating condition. The plunger assembly (140) includes an elongate plunger body (160) primarily made by metal forming (not cutting), with the plunger body (160) having a central through-bore (164). In one embodiment, the central through-bore (164) includes a recess (166) facing the orifice (27) and a resilient valve seal (170) is received within the recess (160). An internal return spring (188) biases the valve seal (170) forwardly within the recess (166). A retaining ring (174) retains the valve seal (170) within the recess (166) at a precise axial location. In another embodiment, the valve seal (170) is received within a recess (196) in a seal retainer (190), which itself is press-fitted within the through-bore (164) in the plunger body (160). A retainer ring (198) also retains the valve seal (170) within the recess (196) in the second embodiment. In either embodiment, the valve seal (170) is allowed to float within the respective recess to absorb limited off-axis movement of the valve seal (170) against the orifice (27).

## Description

This invention is in the field of electrically-operated solenoid valves. More specifically, the invention is a solenoid valve incorporating an improved plunger assembly.

Solenoid valves are well developed in the art. The simplest solenoid valve has four basic functional parts: a solenoid coil, a valve body, a sleeve assembly, and a magnetic plunger or armature assembly. When current is applied to the solenoid coil, the plunger either opens or closes a main orifice in the valve body, thereby controlling the flow of fluid from an inlet port to an outlet port. When the current is removed, the plunger is returned to its original position by a spring. The plunger typically has a valve seal of a soft synthetic material at its forward end to provide a fluid-tight seal against the orifice when the coil is energized.

For three-way valves, a second port is provided in the magnetic stop or pole piece at the end of the solenoid coil, which leads to a second orifice facing the rear end of the plunger body. The plunger is normally biased against the second orifice when the coil is de-energized and moves away from the orifice when the coil is energized. For the three-way valve the plunger typically also includes a second resilient seal at its rear end to provide a fluid-tight seal against the second orifice when the coil is de-energized.

One well-known type of plunger assembly for a solenoid valve is shown in Patent Specification US-A-5,127,624, which is owned by the assignee of the present invention. The plunger assembly shown and described in this patent comprises an elongated plunger body formed of magnetic material and slideably disposed within a sleeve assembly. The sleeve assembly includes a non-magnetic sleeve and a magnetic stop, and in some cases, a flange. A central through-bore is provided in the plunger body, which opens to an enlarged recess at the forward (lower) end of the body. A valve seal is received in the recess for sealing against a main orifice in the valve body. For three-way operation, the through-bore is closed at the rear (upper) end by an upper seal, which is designed to seal against a second orifice in the magnetic stop. An internal return spring can be located in the through-bore to allow slight movement of the upper seal when the seal contacts the valve seat defining the second orifice. An external spring is also provided, which is located between the sleeve assembly and an annular lip at the forward end of the plunger to urge the plunger forwardly toward the first orifice.

The valve seal is shown as being either press-fit in the recess, or including ribs or grooves along the sides of the seal which deformably grab ribs or grooves along the sides of the recess. It is also known to crimp the end of the plunger body to retain the valve seal in the recess. In the crimping technique, the seal typically has a close fit in the recess.

While the solenoid valve shown in Patent Specification US-A-5,127,624 has received wide-spread acceptance in the marketplace as a robust valve that can withstand repeated cycling, the plunger body is a relatively complex component that requires various cutting and finishing steps, particularly to form the exterior geometry of the plunger body. Detailed metal cutting is often necessary to form the body to the tight tolerances necessary for sensitive applications. Such detailed machining and assembly steps, however, increase the manufacturing time and cost to produce these parts; can be difficult to control; and can raise corrosion issues when the surface of the plunger body is compromised by the cutting operations (sometimes requiring additional annealing and passivation steps).

It can also be difficult to locate and retain the valve seal within the plunger body. A press-fit requires the seal and plunger body to be formed to tight tolerances to avoid the seal falling out of the recess. A seal that is press-fit or close-fit, however, can be deformed as it is pushed into the recess, which can cause dimensional irregularities in the forward sealing surface of the valve seal, and raise sealing issues when the solenoid is operated. It is also known to pop-fit (i.e., jam or force) a seal into a predefined cavity. However, this can even more seriously deform the forward surface of the seal. It can also be difficult to locate the valve seal axially in the recess so that the plunger assembly has the correct axial length for proper operation. If the seal is pushed too far into the recess, it can be difficult (or impossible) to remove or back-out the seal, which can lead to solenoid valves having different operating characteristics. It is, of course, important that the manufacturing techniques employed produce solenoid valves having the same or essentially the same operating characteristics (e.g., operating voltages, cracking pressures, flow, etc.) to avoid having to calibrate each valve coming off the assembly line.

It is also believed that many of the prior techniques for retaining a valve seal in a plunger body do not address the issues associated with seal swell, that is, the tendency of certain elastomeric materials to expand when exposed to certain fluids (such as lubricating oils); additives in the fluids (such as gasoline additives); or just generally due to the operating conditions of the solenoid valve. If the valve seal is closely held within a cavity, the seal can only expand in the forward axial direction, thereby further deforming the forward sealing surface and changing the overall dimensions of the plunger assembly. Even if there is clearance at the rear end of the seal, the seal can still swell forwardly if it is closely held around its diameter. Deformation of the seal by swelling can also affect the sealing characteristics of the solenoid valve, as well as the sealing and operating consistency between valves.

The plunger body can also have off-axis movement as it moves toward and away from the main orifice in the valve body. Such off-axis movement can effect the sealing quality, if for example, the valve seal is slightly mis-aligned with the orifice when the plunger moves against the orifice. It is thereby typically necessary to use relatively soft material for the valve seal to obtain a proper sealing characteristic with the orifice. Soft valve seals, however, have a tendency to wear, and must be replaced at regular intervals. Replacing such valve seals can require the entire solenoid valve to be removed from service and the plunger assembly to be replaced. This increases the parts and service cost for the solenoid valve, and over-all, the cost for maintaining the fluid system.

As such, it is believed there is a demand in the industry for a robust solenoid valve that can withstand repeated cycling, and which minimizes and simplifies the machining and assembly steps so as to reduce the manufacturing, assembly and maintenance costs. It is also believed there is a demand in the industry for a solenoid valve that allows the use of harder valve seals which wear less rapidly, but which do not compromise the sealing characteristics of the valve. It is also believed there is a continual demand for a low-cost solenoid valve which effectively and efficiently operates to open and close (at least one) flow path through a fluid system.

According to one aspect of the present invention there is provided a solenoid valve having a valve body with inlet and outlet ports and an internal main orifice fluidly interconnecting the inlet and outlet ports, a solenoid coil assembly mounted to the valve body, a sleeve assembly disposed within the solenoid coil assembly, and a plunger assembly axially slideable within the sleeve assembly and sealing against the orifice to prevent fluid flow through the orifice when the solenoid valve is in one operating condition, and moving away from the orifice to allow fluid flow through the orifice when the solenoid valve is in another operating condition, the plunger assembly including an elongated plunger body. The plunger body has a forward end with a recess facing the orifice, a resilient valve seal loosely received within the recess, and a retaining device retaining the valve seal loosely within the recess. The valve seal is allowed to float within the recess to absorb limited off-axis movement of the plunger body toward and away from the orifice such that the valve seal can seal against the orifice.

The present invention provides a new and unique solenoid valve, and more particularly, a new and unique plunger assembly for such a valve. The plunger assembly is simple to manufacture using only metal forming techniques rather than more expensive, difficult and problematic metal cutting techniques; overall has components that are also relatively easy and inexpensive to manufacture and assemble within tight tolerances; and allows the use of a harder durometer valve seals for longer life, yet which maintains consistent sealing characteristics during repeated cycling.

According to the present invention, the plunger body includes a central through-bore, which according to a first embodiment, opens to an enlarged recess at the forward end of the plunger body. A resilient valve seal is loosely received in the recess, and allowed both lateral (side-to-side) and axial (front-to-rear) movement. The valve seal is retained in the recess by a retaining ring. The retaining ring is located in a counter bore in the recess, and fixed to the plunger body preferably by orbital riveting a portion of the plunger body surrounding the recess. An internal return spring is provided in the through-bore to bias the valve seal against the retaining ring. A spacer washer can be provided against the rear surface of the valve seal to protect the seal from the internal return spring. The return spring also extends outwardly from the rear end of the plunger body and against the magnetic stop to bias the plunger forwardly toward the main orifice in the valve body. In any case, the valve seal is held by the internal spring at a precise axial location in the plunger body.

According to a second embodiment, a seal retainer is fixed in the central through-bore of the plunger body. The retainer is a stamped or drawn non-magnetic metal component, and includes a cup-shaped forward head portion with a recess, and a cylindrical body portion that is press-fit in the through-bore of the plunger body. The valve seal is again loosely retained in the recess and retained in the recess by a retaining ring. The retaining ring in the second embodiment includes an annular end wall portion, and a cylindrical sidewall portion that is press-fit in the head portion of the retainer. As with the first embodiment, a spacer washer is provided between the valve seal and the internal end wall of the insert retainer, and an internal spring biases the valve seal against the retaining ring. For a three-way valve, the seal is closely held in the axial direction, and the spacer washer has axial protrusions ("bumps") on one or both surfaces to absorb seal swell and to compensate for component tolerances.

The head portion of the seal retainer includes a lip surrounding the open end, and an external spring is provided between the sleeve assembly and the lip, to bias the plunger toward the main orifice in the valve body. In this embodiment, an upper seal (for three-way operation) or a bumper (for two-way operation) is provided in the upper end of the central through- bore in the plunger body. The internal spring also allows slight axial movement of the upper seal/bumper when the plunger assembly engages the stop when the coil is de-energized.

In either embodiment, the exterior surface of the plunger body is formed using metal forming techniques, and preferably cold-heading techniques, which are generally cheaper and faster than metal cutting steps, and generally allow greater control of the tolerances of the formed parts. The external surface of the plunger body also has a simple geometry that is easy to form by such techniques. Cold-heading techniques also do not significantly effect the corrosion resistance properties of the plunger body. While it is necessary to use some metal cutting techniques (drilling) to form the central through-bore and recess, such metal cutting techniques are kept to a minimum in the invention to reduce manufacturing costs.

The valve seal can also be easily located in the plunger body to meet the high tolerances necessary for sensitive applications. The axial dimensions of the plunger assembly can thereby be maintained within tight tolerances, and the seal can be located in the recess without deforming the forward sealing surface. The orbital riveting process for retaining the retaining ring in the first embodiment is a low-impact deforming process that does not significantly degrade or otherwise effect the plunger body. Seal swell of the valve seal in either embodiment is absorbed by the internal spring and/or bumpy washer to maintain the precise location of the forward sealing surface of the valve seal in the plunger body.

The loose retaining of the valve seal in the plunger also compensates for axial misalignment of the plunger with the orifice in the valve body, as the valve seal can move slightly to properly seal against the main orifice. This allows valve seals of a harder durometer material to be used, which generally reduces the frequency of replacement of the seal, and thereby reduces service and maintenance costs. The use of a harder durometer seal generally also results in less swell. The tolerances of the valve seal and recess in the plunger body (first embodiment) and seal retainer (second embodiment) are also relaxed, which also reduces the manufacturing costs of the valve seal and plunger.

The seal retainer (for the second embodiment) is also easy to form, preferably by a simple stamping or drawing operation. This allows the retainer dimensions to be tightly controlled and also easily scalable for different applications.

Finally, the solenoid valve of the present invention continues to have good operating characteristics, as the plunger body has a low magnetic reluctance, and is of a robust design.

Preferred embodiments of the present invention will now be described hereinbelow by way of example only with reference to the accompanying drawings, in which:
Figure 1 is a cross-sectional side view of a prior art solenoid valve;
Figure 2 is a cross-sectional side view of a first embodiment of the solenoid valve of the present invention;
Figure 3 is an exploded view of the various components of the plunger assembly for the solenoid valve of Figure 2;
Figure 4 is an end view of the plunger assembly for the solenoid valve of Figure 2;
Figure 5 is a cross-sectional side view of the plunger assembly taken substantially along the plane described by the lines 5-5 of Figure 4;
Figure 6 is a cross-sectional side view of the plunger body for the plunger assembly of Figure 3;
Figure 7 a cross-sectional side view of a second embodiment of the solenoid valve of the present invention;
Figure 8 is an exploded view of the various components of the plunger assembly for the solenoid valve of Figure 7;
Figure 9 is an end view of the plunger assembly for the solenoid valve of Figure 7; and
Figure 10 is a cross-sectional side view of the plunger assembly taken substantially along the plane described by the lines 10-10 of Figure 9.

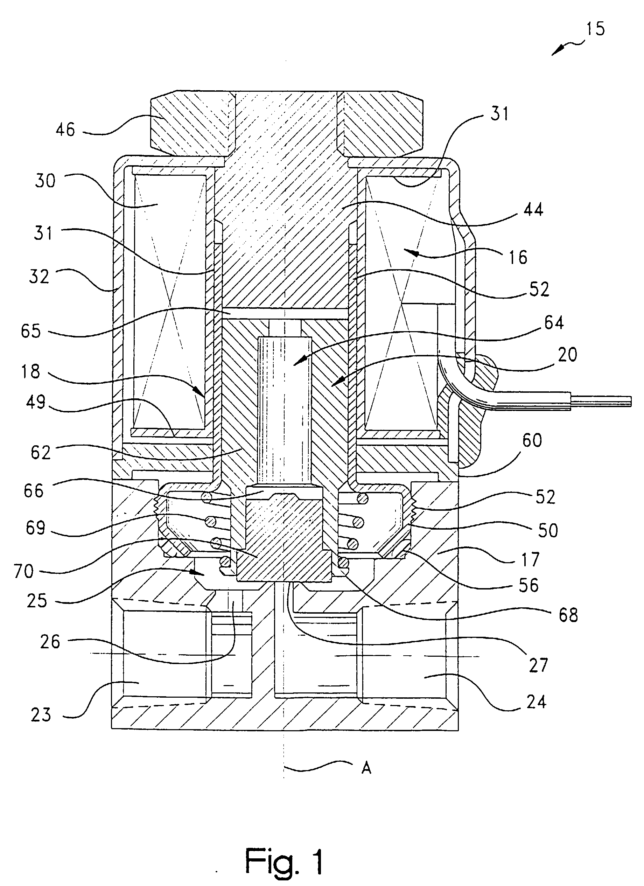

Referring to the drawings and initially to Figure 1, an electrically-operated solenoid valve is indicated generally at 15. The valve 15 includes a solenoid coil assembly, indicated generally at 16; a valve body 17; a sleeve assembly, indicated generally at 18; and a plunger assembly, indicated generally at 20. Valve body 17 contains inlet port 23, outlet port 24 and a threaded cup-like cavity 25. Inlet port 23 and outlet port 24 include an inlet passage 26 and a main orifice 27, respectively, into cavity 25. Passage 26 provides fluid flow from inlet port 26 into cavity 25; while main orifice 27 provides fluid flow out of cavity 25 into outlet port 24. Main orifice 27 is generally located along the central axis "A" of body 17, and defines a valve seat that is generally perpendicular to the axis. Valve body 17 is typically manufactured from brass, stainless steel or plastic. The direction of fluid flow through the valve can, of course, be reversed as should be known to those skilled in the art. Also, while the terms "upper" and "lower", and "front" and "rear", are used throughout, these terms are merely used as reference points to one another, and should not be interpreted as limiting the scope of the present invention to any particular orientation.

The solenoid coil assembly 16 is mounted to valve body 17 in a conventional manner, and includes a wire coil 30 wound around a polymeric bobbin 31, both of which are enclosed within a non-magnetic housing 32. The coil assembly is enclosed at an upper end by a stop or pole piece 44. Stop 44 is formed from magnetic stainless steel such that it forms a portion of a path having low magnetic reluctance when solenoid coil 30 is energized. A nut 46, which is often magnetic, is threaded down on the end of stop 44 to hold the upper components of the solenoid valve together. The solenoid coil assembly 16 is preferably conventional in design, and should be well-known to those skilled in the art. It is noted that the illustrated and described solenoid coil assembly is just one type of coil assembly that can be used with the present invention. Other types should be well-known to those skilled in the art.

Likewise, the sleeve assembly 18 is also conventional in design. Sleeve assembly 18 preferably includes a cylindrical, non-magnetic sleeve member 49 with a first end 50 that is flared or expanded, and a second end 51 that is welded to the stop 44. The flared end 50 includes an annular threaded portion 52 located about the external surface. The threaded portion allows the sleeve member to mate with corresponding threads in cavity 25 of body 17. An annular gasket 56 is located between the flared end and the valve body 17. The flared end is also inwardly-tapered below the threaded portion, such that when sleeve assembly 18 is screwed into body 17, gasket 28 is compressed and provides a seal between body 17 and sleeve assembly 18. Further details of the technique of forming the sleeve member can be found in Patent Specification US-A-5,127,624. Again, other sleeve assemblies other than what is illustrated and described can be used with the present invention, as should be known to those skilled in the art.

The prior art plunger assembly 20 illustrated in Figure 1 includes an elongated plunger body 62 having a central through-bore 64. The through-bore 64 opens into an enlarged recess 66, at the lower or forward end of the plunger. External axial grooves on plunger body 62 fluidly connect cavity 25 with the cavity 65 between the rear (upper) end of the plunger body and the adjacent face of the magnetic stop. The grooves provide venting of cavity 65 to prevent a "dashpot" affect during movement of the plunger. For three-way operation, a seal or plug can be located in the through-bore at the upper end of the plunger body, in which case an internal spring is typically also located in through-bore 64, (Patent Specification US-A-5,127,674). An outwardly-projecting lip 68 is provided at the lower opening of the recess 66. A spring 69 is provided between lip 68 and the expanded end 50 of the sleeve assembly to bias the plunger assembly downward toward main orifice 27. A resilient valve seal 70 is received within the recess 66, and is designed to seal against orifice 27 when the solenoid is de-energized. When the solenoid is energized, the valve seal 70 is moved away from the orifice 27 to allow fluid to flow between inlet port 23 and outlet port 24.

As indicated previously, the plunger body 62 in the solenoid of Figure 1 is typically formed entirely by metal cutting techniques, which requires time-consuming and expensive steps. The illustrated valve seal 70 is closely received (press-fit or forced) into recess 66 in the plunger body 62. This can cause deformation of the valve seal and be difficult to locate the seal properly in the recess. Additional geometries (ribs, etc.) in the recess are formed by additional cutting steps, which also increases manufacturing costs and increases the difficulties in assembling the valve seal in the recess. Seal swell of the insert (particularly in the axial direction) can also cause deformation/irregularities in the forward sealing surface of the valve seal. It should also be appreciated that any off-axis movement of the plunger body can cause the valve seal to be misaligned with orifice 27, which can raise sealing issues.

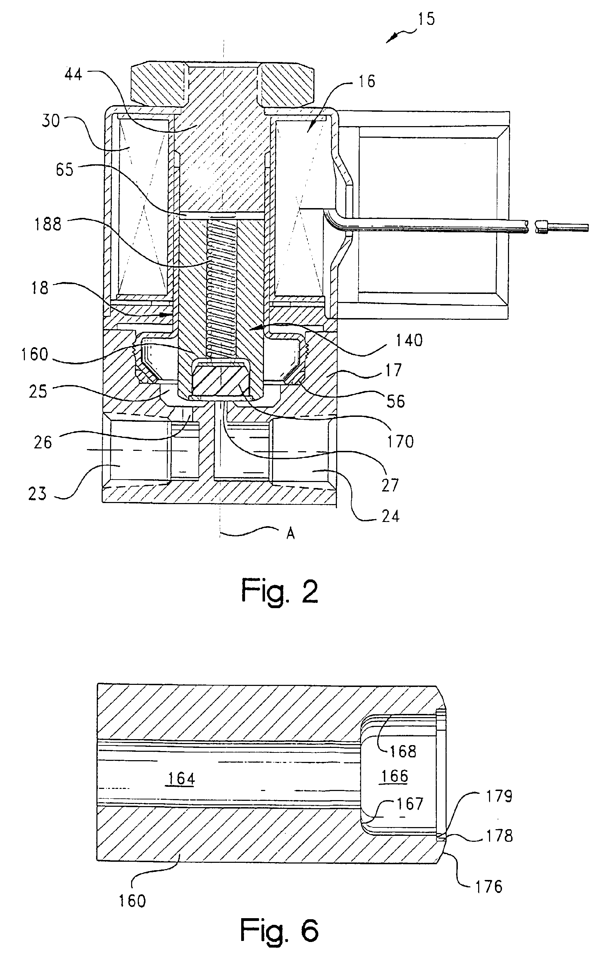

Referring now to Figures 2-9, the plunger assembly of the present invention is illustrated generally at 140. Plunger assembly 140 is similar to the plunger assembly 29 of Figure 1, in that the plunger assembly includes an elongated plunger body 160 that is axially-slideable within sleeve assembly 18, and a valve seal 170 that seals against main orifice 27 in the valve body 17; however, the plunger body 160 as shown has a configuration which allows the plunger to be manufactured by simpler, less-expensive and more controllable metal forming techniques, rather than by metal cutting techniques.

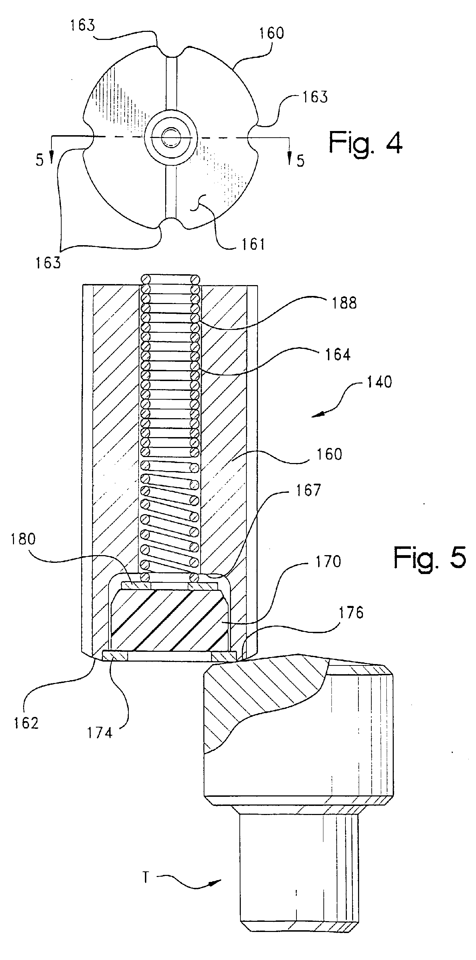

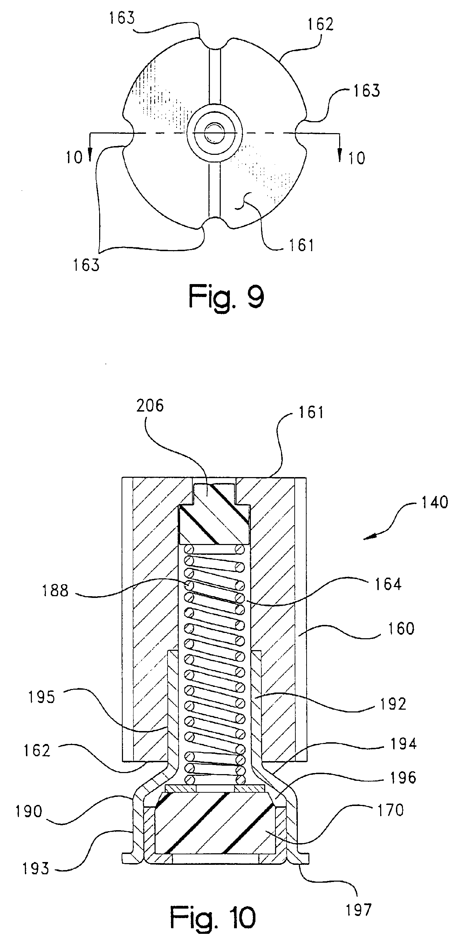

In particular, plunger body 160 is preferably formed from SS430FR bar stock, and has an elongated cylindrical shape with exterior grooves or channels 163 (Figures 4, 9) formed axially along the length of the body, and flat end faces 161, 162. Grooves 163 fluidly connect cavity 25 with the cavity 65 between the plunger body and the adjacent face of the magnetic strip. The plunger body 160 is preferably made by a metal forming technique conventionally referred to as "cold-heading". Such a technique is a relatively quick operation that is easily controllable, and involves progressive die forming the bar stock typically without external heating. It is pointed out that there are no complicated external geometries on body 160 that require special machinery or cutting operations. It has been estimated that such a cold-forming operation reduces the machining costs of the plunger body by 90%, and increases the through-put by as much as 2000% (versus conventional multi-spindle operations).

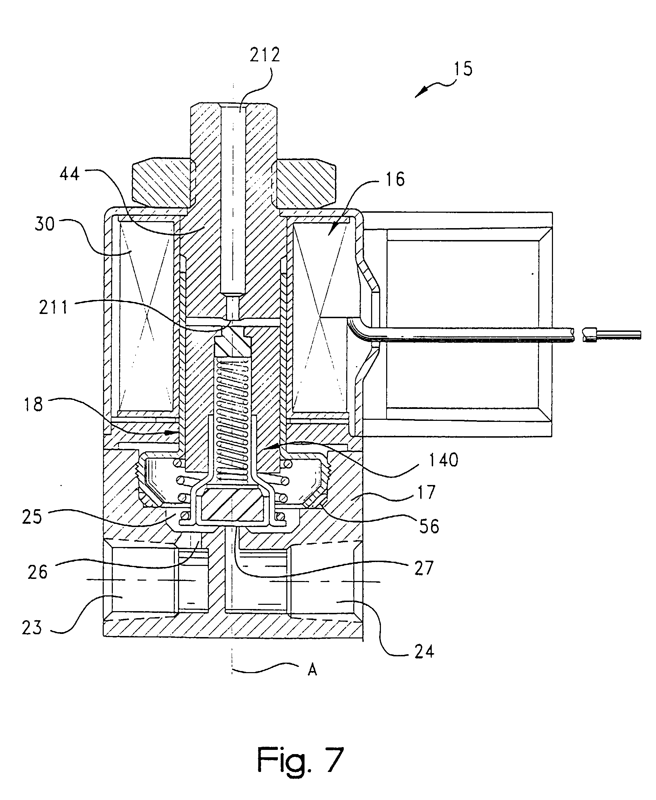

A through-bore 164 is provided centrally in the plunger body. According to a first embodiment as shown in Figures 2-6, through-bore 164 opens to an enlarged cylindrical recess 166 at the forward end of the body. Recess 166 includes a flat, annular internal end wall 167, and a cylindrical internal wall 168 (see Figure 6). The through- bore 64 and recess 166 are formed by conventional cutting operations (drilling, etc.), which although typically more expensive than metal forming, is limited to only the internal geometry of the plunger, which thereby minimizes cost.

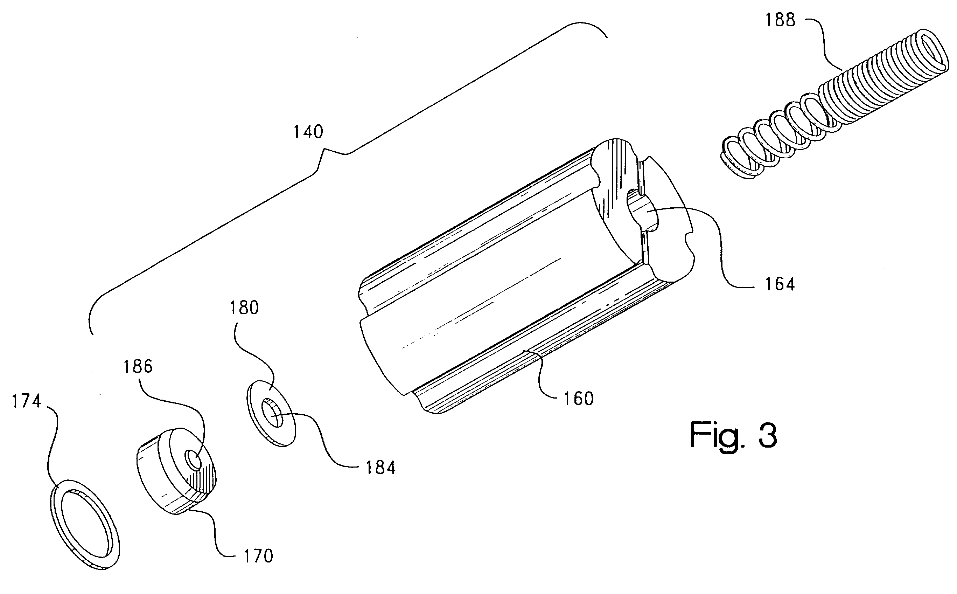

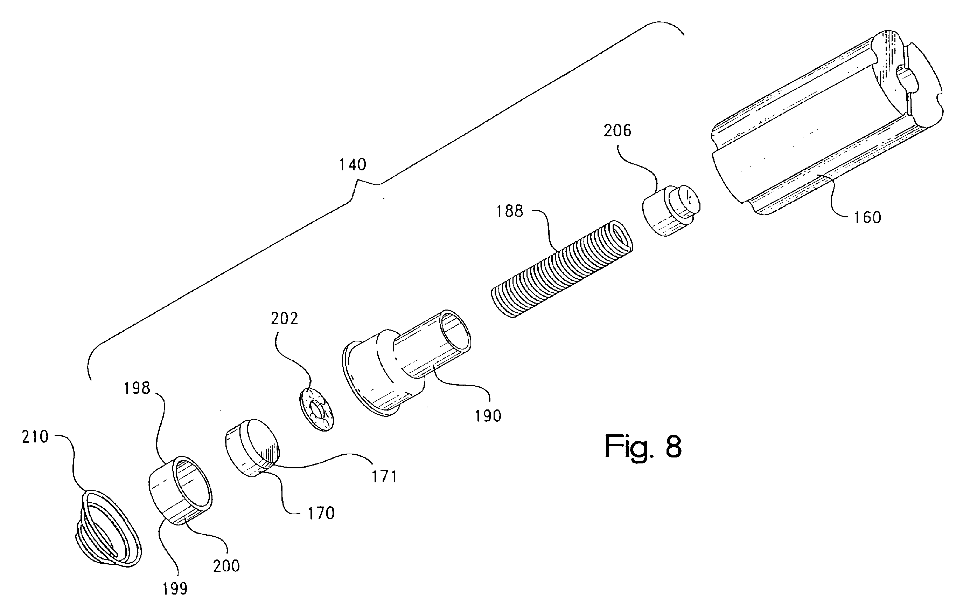

In contrast to the valve seal 70 in the prior art solenoid valve of Figure 1, the valve seal 170 of the present invention is loosely retained and supported in the plunger body. As shown in Figure 3, valve seal 170 comprises a disc-shaped, resilient seal, preferably formed from NBR, FKM, PTFE, EPDM, Ruby or other appropriate material using appropriate manufacturing techniques, such as transfer molding. The forward seal surface of the valve seal is flat, while the rear surface of the valve seal can have a chamfer 171 (see Figure 8) around the outer edge for orientation purposes and to facilitate assembly. As shown in Figure 5, valve seal 170 is directly supported in the recess 166 in the plunger body and has lateral (side-to-side) as well as axial (front-to-back) clearance.

The valve seal 170 is retained in the recess by a retaining ring 174. Retaining ring 174 preferably comprises a flat metal washer with an inner diameter just slightly smaller than the outer diameter of the valve seal, so as to not significantly block the sealing surface of the valve seal. As shown in Figure 6, the forward end of the plunger body 170 narrows down to an annular lip portion 176, and includes an annular counter bore 178 into recess 166, with an internal annular shoulder 179. The retaining ring 174 has an outer diameter such that it can be easily received within counter bore 178, and abut shoulder 179. Shoulder 179 can also be easily and precisely formed by drilling operations, so that the ring is held at a precise location in the plunger body.

The lip portion 176 of the plunger body is cold-formed (preferably by orbital riveting with a tool "T" as illustrated in Figure 5) over the outer surface of the retaining ring to securely hold the retaining ring in the plunger body. Such an orbital riveting operation is low-impact, metal forming operation that is less abusive than e.g., coining, and prevents or at least minimizes damage to the plunger body and valve seal. The forming operation firmly retains the retaining ring against shoulder 179 to thereby fix the retaining ring to the plunger body.

A metal spacer washer 180 can also be provided between the valve seal 170 and against the internal end wall 167 of the recess 166. Washer 180 includes a central opening 184 which receives a residual molding sprue or machining cut-off projection 184 on the end surface of the valve seal facing the washer. The dimensions of retaining ring 174 and spacer washer 180 are relatively easy to maintain, as these are simple components to manufacture.

Valve seal 170 has an outer diameter slightly smaller than the inner diameter of the recess 166, such that the valve seal can move laterally a small amount. The valve seal also has a slightly smaller axial length than the recess, such that the valve seal can also move a small amount axially between the retaining ring and the spacer washer. As an example, the valve seal can have an outer diameter about .01 inch (.025 cm) less than the inner diameter of the recess 166, and a length of about .01 inch (.025 cm) less than the length of the recess between the retaining ring and the spacer washer, for a valve seal having a total length of .12 inches (.31 cm) and a total outer diameter of .28 inches (.072 cm). These dimensions are only approximates and examples, and the dimensions can of course vary depending upon the particular application. In any case, twisting or cocking of the valve seal within the recess is prevented by the spacer washer 180 and the retaining ring 174.

An internal return spring 188 is provided in central bore 164 of the plunger body. Spring 188 acts against spacer washer 180, and thereby against valve seal 170, and urges valve seal 170 forwardly against retaining ring 174. Spacer washer 180 protects the valve seal from any damage caused by the end of the spring. Since the retaining ring is at a precise location, the sealing surface of the valve seal can thereby be held at a precise location in the plunger body without deforming or damaging the valve seal. Seal swell is easily absorbed by the compression of the spring, again without deforming or damaging the valve seal. It has been found that tolerances (in the axial length of the plunger assembly) can be kept to within ± .001 inch (± .00225 cm), which is believed more than adequate for strokes that are typically in the .014 - .020 inch (.035-.050 cm) range, and a significant improvement over prior designs. Previously, with machined (cut) plunger bodies where valve seals are press-fit or pop-fit, it is believed there was difficulty in maintaining tolerances within ± .005 inch (.013 cm), which would raise issues with short plunger strokes.

Spring 188 also acts as a biasing spring, and extends outwardly from the rear (upper) end of the plunger body against stop 44. When the solenoid is de- energized, spring 188 biases plunger body 160 forwardly (downwardly) such that valve seal 170 seals against main orifice 27. When the solenoid is energized, the plunger body is moved axially rearwardly (upwardly) against spring 188 and away from orifice 27 by the generated flux field, such that fluid can flow from inlet 23 to outlet 24.

With the slight side-to-side and axial movement of the valve seal, the valve seal automatically compensates for off-axis displacement of the plunger with respect to the orifice 27, while still providing a proper seal against the orifice. This allows harder material to be used for the valve seal without compromising the quality of the seal. While it is believed previous valve seals typically had a hardness of 70 Shore A, the valve seal of the present invention can have a durometer on the order of 80-95 Shore A, and still have proper sealing characteristics. Harder durometer seals also generally have less seal swell, which further reduces any potential deformation or irregularities in the seal surface. Of course, lower durometer valve seals can be used, with the understanding that the valve seals may have to be replaced more often.

A second embodiment of the present invention is shown in Figures 7-10. In this embodiment, a seal retainer 190 is provided to directly support the valve seal. Seal retainer 190 includes a cylindrical body portion 192 and an enlarged, cup-shaped head portion 193, interconnected by a conical throat 194. Body portion 192, head portion 193 and throat 194 are preferably formed unitary, in one piece, with each other. Body portion 192 is closely received (preferably press-fit) in central bore 164. Bore 164 preferably includes a slightly larger diameter portion as at 195 to receive the body portion 192, but otherwise the plunger body preferably has the same exterior configuration, and is formed in the same manner, as the plunger body described with respect to the first embodiment. The enlarged head 193 of the seal retainer projects outwardly from the forward end of the plunger body and includes a recess 196. An annular radially-outwardly projecting lip 197 bounds the outer distal end (mouth) of the enlarged head.

Seal retainer 190 is preferably formed by stamping or die-casting a thin metal sheet, such as by using an eyelet machine. Such metal forming operations are relatively easy and fast to accomplish. Preferably a non-magnetic metal (e.g., stainless steel) is used for the insert retainer such that the retainer is not magnetically attracted to the valve body during operation. This further improves the consistent operation of the solenoid valve.

The valve seal 170 is dimensioned to be loosely received in the recess 196 of the head portion 193, in the same manner as the valve seal was loosely received in the recess 160 in the first embodiment. At least for a two-way valve, slight side-to-side and axial movement of the valve seal within the recess 196 is allowed. The valve seal is again retained within the recess 196 by a retaining ring 198. In this embodiment, the retaining ring includes an annular end surface 199 and a cylindrical sidewall portion 200 which is closely received (preferably press-fit) within the enlarged head 193 of the seal retainer. The annular end surface 199 projects radially inward far enough to prevent the seal from pushing out through the end of the retainer, but otherwise does not interfere with the forward surface of the seal. As with the first embodiment, the axial dimension of the plunger assembly can be carefully controlled by the easy manufacturing of the retaining ring, valve seal and seal retainer, and by press-fitting the retaining ring to an appropriate depth within the enlarged head portion 193 of the retainer.

A spacer washer 202 can also be provided between the valve seal 170 and the inner end wall of the enlarged head 193. The spacer washer is sized to fit within the seal retainer at about the junction between the enlarged head portion 193, and the throat 194. Spacer washer 202 preferably has the same configuration (annular) as spacer washer 180 of the first embodiment. In a three-way solenoid valve, it is generally preferred to closely hold the valve seal in the axial direction to prevent significant axial movement. As such, the valve seal can be closely held by the retaining ring on one end, and the spacer washer on the other. To compensate for seal swell in the axial direction, the spacer washer can have a bumpy surface, at least on the surface facing the valve seal. Such a bumpy surface is created by forming axial protrusions, ridges, or other irregularities on one, and preferably both, surfaces of the washer (so that the washer can be located with either surface facing the valve seal). The "bumpy" configuration allows the valve seal to axially expand into the areas between the bumps to accommodate seal swell, and thereby maintain the good sealing characteristics of the forward seal surface. The location and dimension of the "bumps" formed on the washer can be easily determined by simple experimentation and generally depend on the particular application (i.e., the anticipated seal swell). In certain applications, the internal spring 188 may not be necessary as the "bumps" on the spacer washer essentially absorb any axial swell, and urge the valve seal forwardly against the retaining ring.

Figures 7-10 illustrate a form of the invention where a three-way valve is provided. In this form, a resilient seal 206 is provided at the upper end of the bore 164. Again, internal spring 188 biases the valve seal 170 forwardly against retaining ring 198. An external return spring 210 is also provided which extends between sleeve assembly 18 and lip 197 in recess 25, at the end of head 194. Spring 210 biases plunger assembly 140 forwardly in the same manner as internal spring 188 in the first embodiment. For three-way operation, an orifice 211 is provided in stop 44, which is fluidly connected to a second outlet port 212. Upper seal 206 is configured to seal orifice 211 when the solenoid is energized, and to move away from the orifice 211 when the solenoid is de-energized.

It is relatively simple to reconfigure the solenoid in Figures 8-11 as a two-way valve. Upper seal 206 can be replaced by a simple metal button. The metal button also provides a bias against the valve seat defining orifice 211 to facilitate the movement of the plunger away from the magnetic stop.

As described above, a novel and unique plunger assembly for a solenoid valve is provided which is simple to manufacture using mostly metal forming steps rather than more expensive metal cutting steps; has other components that are also relatively easy and inexpensive to manufacture and assemble within tight tolerances; and allows the use of a harder durometer valve seals for longer life, yet which maintains consistent sealing characteristics during repeated cycling.

## Claims

1. A solenoid valve (15) including a valve body (17) with inlet and outlet ports (23, 24) and an internal main orifice (27) fluidly interconnecting the inlet and outlet ports, a solenoid coil assembly (16) mounted to the valve body, a sleeve assembly (18) disposed within the solenoid coil assembly, and a plunger assembly (140) axially slideable within the sleeve assembly to seal against the orifice to prevent fluid flow therethrough when the solenoid valve is in one operating condition and be spaced from the orifice to allow fluid flow therethrough when the solenoid valve is in another operating condition, characterized in that the plunger assembly includes an elongate plunger body (160) having a forward end with a recess (166, 196) facing the orifice, a resilient valve seal (170) loosely received within the recess, and retaining means (174, 198) retaining the valve seal loosely within the recess, the valve seal being allowed to float within the recess to absorb limited off-axis movement of the plunger body toward and away from the orifice such that the valve seal can seal against the orifice.

2. The solenoid valve as in claim 1, wherein the retaining means (174) is ring-shaped and located within a counter bore (178) in the recess (166), and a portion of the plunger body (160) surrounding the recess is mechanically deformed by orbital riveting over the retaining means.

3. The solenoid valve as in claim 1 or 2, further including a central bore (164) along the axis of the plunger body (160), and a compression spring (188) disposed within the central bore and having one end extending into the recess (166, 196) and against the valve seal (170) to urge the valve seal against the retaining means (174, 198).

4. The solenoid valve as in any of claims 1 to 3, further including a magnetic stop (44) therewithin, and wherein the plunger body (160) includes a rear end facing the stop, and the compression spring (188) has one end extending into the recess (166, 198) and against the valve seal (170) to urge the valve seal against the retaining means (174, 198) and another end extending out the rear end of the plunger body and against the stop to urge the plunger body away from the stop.

5. The solenoid valve as in any of claims 1 to 4, further including a spacer washer (180) disposed in the recess (166) between the valve seal (170) and an internal end wall (167) of the recess.

6. The solenoid valve as in claim 5, wherein the valve seal (170) has a disk-shape, a forward sealing surface of which faces the orifice (27), and a rear surface of which includes a chamfer (171) around the edge thereof and faces the internal end wall (167) of the recess (166).

7. The solenoid valve as in any of claims 1 to 6, further including a central through-bore (164) along the axis of the plunger body (160), an upper seal member (206) fixedly disposed within the through-bore, and a compression spring (188) disposed within the through-bore, the compression spring having one end extending into the recess (166, 196) and against the valve seal (170) to urge the valve seal against the retaining means (174, 198) and another end disposed against the upper seal member.

8. The solenoid valve as in any of claims 1 to 7, wherein the exterior surface of the plunger body (160) is formed entirely by cold heading the same.

9. The solenoid valve as in any of claims 1 to 8, wherein the plunger body (160) has a central bore (164) opening to the forward end, the plunger assembly (140) includes a seal retainer (190) located within the central bore, and the valve seal (170) is loosely received within the seal retainer.

10. The solenoid valve as in claim 9, wherein the seal retainer (190) includes an enlarged, cup-shaped head (193) defining the recess (196), and a cylindrical body (192) received within the central bore (164) of the plunger body (160).

11. The solenoid valve as in claim 10, wherein the seal retainer (190) is a unitary, one-piece component press-fitted in the central bore (164) of the plunger body (160).

12. The solenoid valve as in claim 10 or 11, wherein the cup-shaped head (193) of the seal retainer (190) includes a radially-outward projecting lip (197) surrounding the opening to the recess (196).

13. The solenoid valve as in claim 12, further including a return spring (210) surrounding the seal retainer (190) and engaging the radially-outward projecting lip (197) of the cup-shaped head (193) to urge the plunger assembly (140) toward the orifice (27).

14. The solenoid valve as in any of claims 9 to 13, further including a spacer washer (202) disposed in the recess (196) between the valve seal (170) and an internal end wall of the seal retainer (190).

15. The solenoid valve as in claim 14, wherein the spacer washer (202) comprises a bumpy washer.

16. The solenoid valve as in any of claims 9 to 15, wherein the retaining means (198) comprises a cup-shaped member with an annular endwall (199) and a cylindrical sidewall (198), the sidewall (198) being press-fitted in the cup-shaped head (193) of the seal retainer (190).
